# EUROPEAN PATENT SPECIFICATION

(11) **EP 4 272 420 B1**
(45) Date of publication and mention of the grant of the patent: **18.03.2026**
(21) Application number: 21924508.1
(22) Date of filing: 02.02.2021
(51) Int. Cl.: H04M 3/56, H04M 3/42, H04M 3/428, H04W 4/16, H04W 88/06, H04M 1/72454

(54) **SYSTEM FOR MANAGING CALLS AND A METHOD THEREOF**
SYSTEM ZUR VERWALTUNG VON ANRUFEN UND VERFAHREN DAFÜR
SYSTÈME DE GESTION D'APPELS ET PROCÉDÉ ASSOCIÉ

(43) Date of publication of application: 08.11.2023
(73) Proprietor: Dubai Police General Headquarters, Dubai (AE)
(72) Inventor: BIN SAQR ALMARRI, Salem Saqr Majed, Dubai (AE)
(74) Representative: Potter Clarkson
(86) International application number: PCT/IB2021/050815
(87) International publication number: WO 2022/167832

(56) References cited:
- KR-A- 20140 127 700
- KR-B1- 101 038 014
- KR-B1- 101 082 591
- US-A1- 2009 291 675
- US-A1- 2013 051 543
- US-A1- 2015 230 070
- US-A1- 2016 014 579
- US-B1- 10 708 315

## Description

### FIELD OF INVENTION

The present invention is in the field of telecommunication, and more particularly in the field of managing calls amongst multiple users.

### BACKGROUND OF INVENTION

Generally, in a teleconference system, an initiating user calls other users to join a conference call. The number of people that the initiating user can call and allow to join the conference call is usually limited to a predefined number, for example, five. The initiating user and the five other users can then be referred to as "initial group of 6", for example. The problem associated with this type of a teleconference system is that the initiating user is then charged for five calls, simultaneously. In addition, the limitation on number of users that can be added to the conference call is disadvantageous.

Other teleconference systems do allow another user within the initial group of 6 to call other users to join the conference call. It is understood that these particular teleconference systems are limited in that such that an addition of the other users is achieved through a manual process. Other problems with these teleconference systems is associated security risks, for example, if any of the users connects remotely to a conference call with an unsecure Wi-Fi, hackers may gain access to the conference call.

It is accordingly the object of the invention to provide a suitable system and method of managing calls that can ameliorate at least some of the abovementioned problems.

US 2009/291675 A1 discloses a communication apparatus. A first subscriber identity card camps on a first cell belonging to a first wireless network capable of providing a conference communication service for the first subscriber identity card with at most N peer communication entities via a first radio transceiver module. A second subscriber identity card camps on a second cell belonging to a second wireless network via a second radio transceiver module. A processor builds a conference communication for the first subscriber identity card with at most (N-1) peer communication entities via the first cell, receives an add request to add a new peer communication entity to the conference communication, adds the second subscriber identity card to the conference communication via the first cell, and adds the new peer communication entity to the conference communication via the second cell.

US 2015/230070 A1 discloses methods and devices for increasing capacity for handling simultaneous calls to a particular SIM of a wireless communication device having at least a first and second SIM and corresponding first and second radio resources. If a preset maximum number of calls has been reached for a first of the modem stacks, and a radio resource of another other modem stack is handling less than its preset maximum number of calls, the wireless device may send a signal to the network serving the first SIM to activate the call forwarding function. While activated, calls addressed to the first SIM may be received by the wireless device on radio resource associated with the other SIM.

US 10708315 B1 discloses processing conference call communications that may include receiving a request from a customer device to access the conference. One example method of operation may include receiving a conference call access request message from a user device, identifying an identifier included in the access request message associated with the user device, comparing content of the identifier to known identifier information, determining whether to authorize the access request, and responsive to authorizing the access request, transmitting a prompt to the user device to access the conference call.

### SUMMARY OF INVENTION

The present invention comprises a system and method as defined by the claims. Embodiments that do not fall within the scope of the claims are to be interpreted as examples useful for understanding the invention.

A system comprising:
at least a first SIM card and a second SIM card module, each SIM card being arranged to receive/make a predefined number of calls during a conference call;
a processor and a memory device coupled to the processor, the memory device containing instructions which, when executed by the processor are arranged to:
   determine the number of calls received/made by the first SIM card during the conference call; and
   if the number of calls received/made by the first SIM card exceeds or reaches a predefined number of calls that can be received/made by the first SIM card, the processor being arranged to direct the rest of the calls arranged to be received/made by the first SIM card to be received/made by the second SIM card.

The processor is arranged to automatically direct incoming calls during the conference call interchangeably between the first and second SIM cards and cojoin the calls made by the first and second SIM cards into a single conference call, and/or is arranged to automatically make calls interchangeably between the first and second SIM card and cojoin the calls made by the first and second SIM cards into a single conference call.

The memory device contains instructions which, when executed by the processor, are arranged to cause the processor to receive a call or a message from a phone number associated with a remote SIM card associated with a person that wishes to join the conference call, and the processor is arranged to verify the phone number associated with the remote SIM card to check whether the number is allowed to join the conference call.

In verifying the number associated with the remote SIM card associated with the person that wishes to join the conference call, the processor is arranged to compare the phone number associated with a remote SIM card with a list of pre-stored phone numbers, and accordingly confirm whether the phone number associated with the remote SIM card of the person that wishes to join the conference call matches with any of the other phone numbers pre-stored on a database.

The pre-stored numbers may be contained in a database which may be local to, or remote from, the system.

Accordingly, when the phone number associated with the remote SIM card of the person that wishes to join the call is not verified, the processor may be arranged to flag the phone number and reject the phone number from joining the conference call.

In an embodiment, the phone number associated with the remote SIM card of the person that wishes to join the call may request to join the call by either calling into a phone number associated with one of the first and second SIM cards, or by sending a message to a phone number associated with one of the first and second SIM cards.

Accordingly, when the phone number associated with the remote SIM card of the person that wishes to join the call is verified, the processor may be arranged to call back the phone number associated with the remote SIM card of the person that wishes to join the call.

In another embodiment, the processor may be arranged to receive a call from the phone number associated with the remote SIM card of the person that wishes to join the call, and may be arranged to place the call on hold until the processor has managed to verify the number, afterwards the processor may be arranged to admit/receive the call from the phone number associated with the remote SIM card of the person that wishes to join the call, into the conference call.

In yet another embodiment, the processor may be arranged to receive a call-back request from the phone number associated with the remote SIM card of the person that wishes to join the call, and accordingly after the processor has verified the number, the processor may be arranged to call the phone number associated with the remote SIM card of the person that transmitted the message, and accordingly admit that phone number into the conference call.

The memory device may accordingly contain instructions which are arranged to cause the processor to mute the alert sound of incoming calls from phone numbers associated with remote SIM cards of persons that wish to join the conference call, so as to prevent the alert sound of incoming calls from disturbing the people partaking in the conference call.

The memory device may accordingly contain instructions which are arranged to cause the processor to mute the alert sound of outgoing calls made out to phone numbers associated with remote SIM cards of persons that wish to join the conference call, so as to prevent the sound of the outgoing calls from disturbing the people partaking in the conference call.

According to a second aspect of the invention, there is provided a method comprising:
determining the number of calls received/made by a first SIM card during a conference call, and
if the number of calls received by the first SIM card exceeds or reaches a predefined number of calls that can be received/made by the first SIM card, directing the rest of the calls arranged to be received/made by the first SIM card to be received/made by a second SIM card.

The method further comprises receiving a call or a message from a phone number associated with a remote SIM card associated with a person that wishes to join the conference call, and verifying the phone number associated with the remote SIM card to check whether the phone number is allowed to join the conference call.

In verifying the number associated with the remote SIM card associated with the person that wishes to join the conference call, the method includes comparing the phone number associated with the remote SIM card with a list of pre-stored phone numbers, and accordingly confirming whether the phone number associated with the remote SIM card of the person that wishes to join the conference call matches with any of the other pre-stored phone numbers.

The pre-stored numbers may be contained in a database communicatively coupled with the processor.

Accordingly, when the phone number associated with the remote SIM card of the person that wishes to join the call is not verified, the method may include flagging the phone number and rejecting the phone number from joining the conference call.

In an embodiment, the phone number associated with the remote SIM card of the person that wishes to join the call may request to join the call by either calling into a phone number associated with one of the first and second SIM cards, or sending a message to a phone number associated with one of the first and second SIM card modules.

Accordingly, when the phone number associated with the remote SIM card of the person that wishes to join the call is verified, the method may include calling back the phone number associated with the remote SIM card of the person that wishes to join the call.

In another embodiment, the method may include receiving a call from the phone number associated with the remote SIM card of the person that wishes to join the call, and thereafter, the method may include the steps of placing the call on hold until the phone number has been verified, and followed by admitting/receiving the call from the phone number associated with the remote SIM card of the person that wishes to join the call, into the conference call.

In yet another embodiment, the method may include the step of receiving a call-back message request from the phone number associated with the remote SIM card of the person that wishes to join the call, and the method may accordingly include the step of verifying the phone number associated with the call-bac message request, and upon verification, calling the phone number associated with the remote SIM card of the person that transmitted the message, and accordingly admitting that phone number into the conference call.

The method includes the step of automatically directing calls received during the conference call interchangeably between the first and second SIM card and cojoining the calls made by the first and second SIM cards into a single conference call, or the method includes the step of automatically making calls interchangeably between the first and second SIM card and cojoining the calls made by the first and second SIM cards into a single conference call.

The method may further include the step of muting the alert sound of incoming calls from phone numbers associated with remote SIM cards of persons that wish to join the conference call, so as to prevent the alert sound of incoming calls from disturbing the people partaking in the conference call.

The method may further include the step of muting the alert sound of outgoing calls made out to phone numbers associated with remote SIM cards of persons that wish to join the conference call, so as to prevent the sound of the outgoing calls from disturbing the people partaking in the conference call.

### BRIEF DESCRIPTION OF DRAWINGS

The objects and features of the present invention will become fully apparent from following the description taken in conjunction with the accompanying drawings. Undertaking that these drawings depict only typical embodiments of the invention and are therefore, not to be considered limiting its scope, the invention will be described and explained with additional specific and detail through the use of the accompanying drawings in which:
In the drawings:
**Figure** 1 shows a network topology of a system for managing calls, in accordance with the invention; and
**Figure** 2 shows a high-level flow diagram for the steps performed by a computer-implemented method in accordance with the invention.

### DETAILED DESCRIPTION OF AN EXAMPLE EMBODIMENT

While various inventive aspects, concepts and features of the invention may be described and illustrated herein as embodied in combination in the exemplary embodiments, these various aspects, concepts and features may be used in many alternative embodiments, either individually or in various combinations and sub-combinations thereof. Unless expressly exclude herein all such combinations and sub-combinations are intended to be within the scope of the present invention. Still further, while various alternative embodiments as to the various aspects, concepts and features of the invention - such alternative structures, configurations, methods, devices and components, alternatives as to form, fit and function, and so on may be described herein, such descriptions are not intended to be a complete or exhaustive list of available alternative embodiments, whether presently known or later developed.

Those skilled in the art may readily adopt one or more of the inventive aspects, concepts or features into additional embodiments and uses within the scope of the present invention even if such embodiments are not expressly disclosed herein. Still further, exemplary or representative values and ranges may be included to assist in understanding the present disclosure; however, such values and ranges are not to be construed in a limiting sense and are intended to be critical values or ranges only if so expressly, stated. Moreover, while various aspects, features and concepts may be expressly identified herein as being inventive or forming part of an invention, such identification is not intended to be exclusive but rather there may be inventive aspects, concepts and features that are fully described herein without being expressly identified as such or as part of a specific invention.

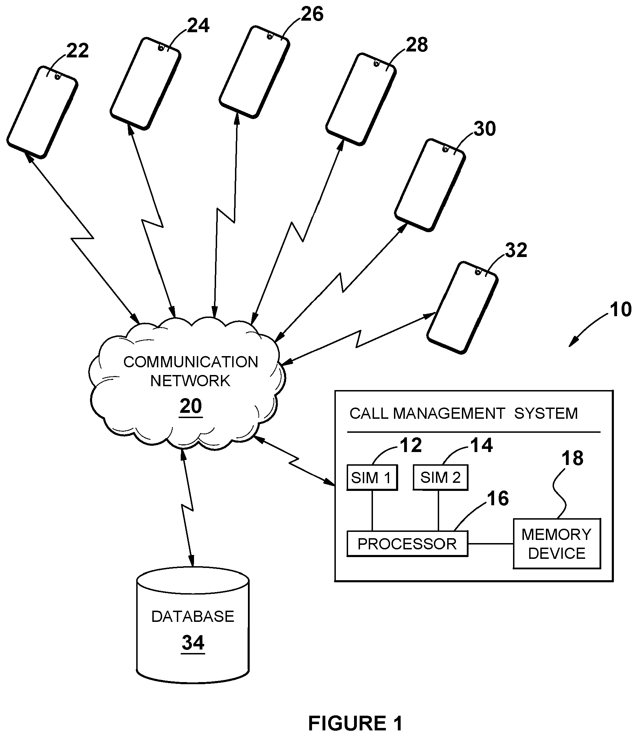

Referring to Figure 1, there is provided a network indicated generally by reference numeral 36. The network 36 includes a call management system 10 that is arranged to be in communication with a plurality of endpoint devices, such as mobile phones, each of which incorporating a SIM card (not shown) for making calls into, or receiving calls from, the system 10. The system 10 is in communication with the endpoint devices, such as communication devices, in particular mobile phones 22, 24, 26, 28, 30 and 32 by a communication network, in particular a telecommunication network 20, such as GSM network.

The system 10 manages calls, for example, a conference call amongst multiple participants of the conference call, which participants are associated with the mobile phones 22, 24, 26, 28, 30 and 32. The system 10 enables multiple callers to be able to have a conference call in a safe and secure environment, without the risk of any bridge in the security of their conference call. Preferably, the system 10 is arranged to manage a conference call emanating from SIM cards (not shown) associated with mobile phones 22, 24, 26, 28, 30 and 32, which are preferably associated with law enforcement officers belonging to mission task forces, military squads, police forces and the like.

The system 10 may be in the form of a control unit which may house a first SIM card 12 and a second SIM card 14. It will be appreciated that the system/control unit may comprise a plurality of SIM cards. However, for brevity, only the first and second SIM cards 12 and 14, respectively, will be described herein.

It will be appreciated that a SIM cards of the system 10 may be arranged to receive or make calls to a predefined number of phone numbers for purposes of creating a conference call. Typically, the maximum number of calls which can be made or received by a communication device making use of a SIM card during a conference call, is five. If other callers in excess of five are required to join on the call, typically all telephone conference systems which make use of SIM cards would not be able to admit the additional callers. The system 10 in accordance with the present invention has at least two SIM cards which can allow multiple callers, exceeding five callers, to enter into a teleconference call.

The system 10 further comprise a processor 16 that is communicatively coupled with the first and second SIM cards 12 and 14, respectively. The system 10 further comprises a memory device 18 that contains various instructions or commands which are arranged to cause the processor 16 to perform various operations, as will be explained in more detail below. The commands contained in the memory device 18 are the AT commands, as known in the art.

In use, when SIM cards (not shown) associated with the first, second, third, fourth, fifth and sixth communication devices 22, 24, 26, 28, 30 and 32 need to enter into a teleconference call, the persons associated with the devices 22, 24, 26, 28, 30 and 32 may dial in a phone number that is associated with the first SIM card 12 of the system 10. In dialling the phone number associated with the first SIM card 12, the persons associated with the devices 22, 24, 26, 28, 30 and 32 may call the phone number associated with the first SIM card 12, or they may send a message to the phone number that is associated with the first SIM card 12, typically by dialling a USSD code to the phone number that is associated with the first SIM card 12.

Upon dialling in, the memory device 18 contains commands which are arranged to detect information associated with SIM cards (not shown) used in the devices 22, 24, 26, 28, 30, 32 which are dialling the phone number that is associated with the first SIM card 12. The commands stored in the memory device 18 are arranged to cause the processor 16 to verify the information, such as phone numbers, associated with SIM cards (not shown) used in the devices 22, 24, 26, 28, 30, 32 dialling into the system 10 against pre-stored phone numbers which are stored in a database 34 that is in communication with the system 10 via the communication network 20.

It will be appreciated that the database 34 may, in one version of the invention, be part of the system 10 and may not be remotely located from the system 10.

In one version of the invention, it will be appreciated that the phone numbers pre-stored in the database may be configured to coincide with the phone numbers of persons who may have been allocated a time slot in which the conference call can be made. For example, if a task force comprises of 100 people, and only 10 people out of the 100 are required to work on a shift for 8 hours on a particular day, the database 34 may be configured to only have access to the phone numbers of the 10 people who will be working on the shift, whilst the rest of the other phone numbers associated with 90 people not working in that particular shift may be inaccessible or locked.

The processor 16 is accordingly arranged to compare the phone numbers of the SIM cards (not shown) associated with each of the devices 22, 24, 26, 28, 30 and 32 dialling into the system 10. Upon comparing the phone numbers of the SIM cards (not shown) associated with each of the devices 22, 24, 26, 28, 30 and 32 dialling into the system 10, the processor 16 is arranged to flag and reject the phone numbers of the SIM cards (not shown) associated with any of the devices 22, 24, 26, 28, 30 and 32 dialling which were not previously stored or pre-registered in the system 10.

Accordingly, the processor 16 is arranged to validate those phone numbers of the SIM cards (not shown) associated with each of the devices 22, 24, 26, 28, 30 and 32 which have been pre-stored in the database 34.

In one version of the invention, when the phone numbers of the SIM cards (not shown) associated with each of the first, second, third and fourth mobile phones 22, 24, 26, 28, 30 and 32, call into the system 10 (i.e. call the phone number associated with the first SIM card 12), the processor 16 is arranged to validate the phone numbers of the incoming calls whilst, at the same time, placing the incoming calls on hold. Once the phone numbers have been verified, the processor 16 is arranged to allocate each incoming call to one of the teleconference call slots available on the first SIM card 12. When the teleconference call slots available on the first SIM card 12 have been exceeded, for example when the maximum number of calls that can be received/made by the first SIM card 12 exceeds five calls, the processor 16 is caused to automatically allocate the other incoming calls to the teleconference call slots available in the second SIM card 14. The processor 16 is arranged to direct the other calls to the second SIM card 14 and synchronizes and cojoins the calls received by the second SIM card 14 with the calls received by the first SIM card 12.

The processor 16 is accordingly arranged to automatically allocate calls received from verified phone numbers to available teleconference slots in the first and second SIM cards 12 and 14, respectively.

In the event that the teleconference call has been initiated between multiple callers, for examples callers associated with the first, second, third, and fourth mobile phones 22, 24, 26, and 28, and it happens that a fifth caller associated with the fifth device 30 calls into the system 10, the processor 16 is arranged to mute the incoming call so that the sound alert of the incoming call does not interfere with the ongoing conference call between the callers associated with the first, second, third and fourth devices 22, 24, 26, and 28, respectively. Thereafter, the processor 16 is arranged to validate the phone number used by the fifth caller, as described previously. While the phone number of the fifth caller is being validated, the processor 16 is arranged to place the call of the fifth caller on hold. Once the phone number of the fifth caller has been validated, the processor 16 is arranged to determine the number of teleconference calls which are being used by the first SIM card 12 to determine available teleconference slots which can receive the incoming call. In the present example, four teleconference slots have been occupied by the first, second, third and fourth callers associated with the first, second, third, and fourth devices 22, 24, 26, and 28, respectively. Accordingly, since the phone number associated with the first SIM card 12 is the main number which can be dialled to join the teleconference, the processor 16 is arranged to keep the fifth teleconference slot of the first SIM card 12 vacant or unoccupied, so that all incoming calls can have access to call the phone number associated with the first SIM card 12. In this case, as mentioned previously, four callers have been allocated to the teleconference call slots associated with the first SIM card 12. The processor 16 is then arranged to automatically divert the incoming call from the fifth caller associated with the fifth device 30, to a first teleconference call slot of the second SIM card 14. Upon diverting the incoming call from the fifth caller to the second SIM card 14, the processor 16 syncs and cojoins the call received by the second SIM card 14 with the ongoing conference call between the first, second, third, and fourth callers. The process mentioned herein is repeated when a sixth caller associated with the sixth mobile device 32 attempts to join the ongoing conference call.

In another version of the invention, when the phone numbers of the SIM cards (not shown) associated with each of the first, second, third and fourth devices 22, 24, 26, 28, dial a USSD code associated with the phone number associated with the first SIM card 12, so as to request a call-back from the system 10, the processor 16 is arranged to validate the phone numbers of the numbers that have dialled the USSD code. Once the phone numbers have been verified, the processor 16 is arranged to determine the number of available teleconference call slots associated with the first SIM card 12. In this case, all of the teleconference call slots of the first SIM card 12 are unoccupied. Accordingly, the processor 16 is arranged to call back the phone numbers associated with the SIM cards (not shown) accommodated in the first, second, third and fourth mobile phones 22, 24, 26, 28, 30, respectively. Upon calling these phone numbers, the processor 16 is arranged to allocate the four phone numbers associated with the SIM cards (not shown) of the four mobile devices 22, 24, 26, and 28 to the four teleconference call slots of the first SIM card 12. When a fifth caller associated with the SIM card (not shown) fitted in the fifth device 30 calls into the system 10, the processor 16 will automatically allocate the other incoming call to the teleconference call slot available in the second SIM card 14. In another version, where the processor 16 is required to call back the phone number associated with the fifth person that requested to join the conference call, the processor 16 is arranged to call the fifth person by using the second SIM card 14 and automatically allocates the call made out to the fifth caller to the teleconference call slot that is available in the second SIM card 14. However, in calling the fifth person, the processor 16 is arranged to mute the outgoing call sound, so as not to disturb the ongoing conference call between the first, second, third, and fourth callers. As soon as the fifth person receives the call made out from the second SIM card 14, the processor 16 will accordingly synchronize and cojoin the call made out to the fifth person with the ongoing conference call.

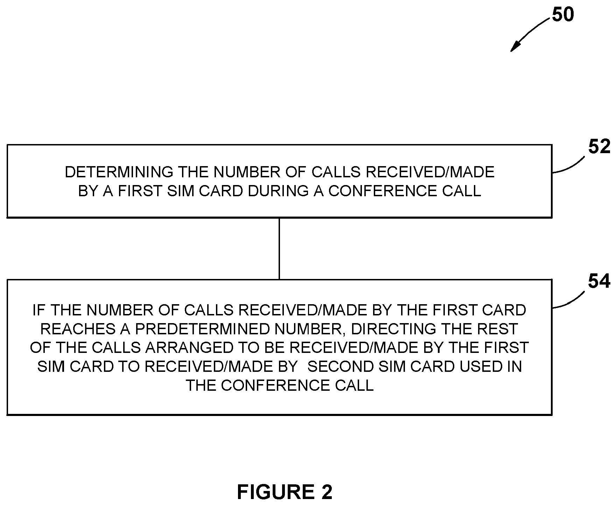

Referring also to Figure 2, the Figure illustrates a high-level flow diagram for the steps performed by a computer-implemented method 50 in accordance with the invention. The method 50 includes, 52: determining the number of calls received/made by a first SIM card during the conference call, and 54:if the number of calls received/made by the first SIM card module exceeds or reaches a predefined number of calls that can be received/made by the first SIM card module, directing the rest of the calls arranged to be received/made by the first SIM card module to be received/made by a second SIM card module.

It will be appreciated the system 10 and method 500 as envisaged herein provided a new and useful way of managing conference calls. In addition, the use of the system 10 provide users with a hassle-free experience of conference calls without incurring exorbitant call charges and with a comfort of reduced security risks.

## Claims

1. A system (10) comprising:
at least a first SIM card (12) and a second SIM card (14), each SIM card (12, 14) being arranged to receive/make a predefined number of calls during a conference call;
a processor (16) and a memory device (18) coupled to the processor (16), the memory device (18) containing instructions which, when executed by the processor (16) are arranged to:
determine the number of calls received/made by the first SIM card (12) during the conference call; and
if the number of calls received/made by the first SIM card (12) exceeds or reaches a predefined number of calls that can be received/made by the first SIM card (12), the processor being arranged to direct the rest of the calls arranged to be received/made by the first SIM card (12) to be received/made by the second SIM card (14);
wherein the processor (16) is arranged to automatically direct incoming calls during the conference call interchangeably between the first and second SIM cards (12, 14) and cojoin the calls made by the first and second SIM cards (12, 14) into a single conference call, and/or the processor (16) is arranged to automatically make calls interchangeably between the first and second SIM cards (12, 14) and cojoin the calls made by the first and second SIM cards (12, 14) into a single conference call, the system being **characterized in that**:
wherein the memory device (18) contains instructions which, when executed by the processor (16), are arranged to cause the processor (16) to receive a call or a message from a phone number associated with a remote SIM card associated with a person that wishes to join the conference call, and the processor (16) being arranged to verify the phone number associated with the remote **SIM** card to check whether the number is allowed to join the conference call,
wherein, in verifying the number associated with the remote **SIM** card associated with the person that wishes to join the conference call, the processor (16) is arranged to compare the phone number associated with a remote **SIM** card with a list of prestored phone numbers, and accordingly confirm whether the phone number associated with the remote **SIM** card of the person that wishes to join the conference call matches with any of the other phone numbers pre-stored on a database (34).

2. The system (10) according to claim 1, wherein, when the phone number associated with the remote **SIM** card of the person that wishes to join the call is not verified, the processor (16) is arranged to flag the phone number and reject the phone number from joining the conference call.

3. The system (10) according to claim 2, wherein the phone number associated with the remote **SIM** card of the person that wishes to join the call can request to join the call by either calling into a phone number associated with one of the first and second **SIM** cards, or by sending a message to a phone number associated with one of the first and second **SIM** cards.

4. The system (10) according to claim 3, wherein, when the phone number associated with the remote **SIM** card of the person that wishes to join the call is verified, the processor (16) is arranged to call back the phone number associated with the remote **SIM** card of the person that wishes to join the call.

5. The system (10) according to claim **4,** wherein when the system (10) receives a call from the phone number associated with the remote **SIM** card of the person that wishes to join the call, the processor (16) is arranged to place the call on hold until the phone number has been verified, and thereafter the processor (16) is arranged to admit/receive the call from the phone number associated with the remote **SIM** card of the person that wishes to join the call, into the conference call.

6. The system (10) according to claim 5, wherein when the system (10) receives a call-back request from the phone number associated with the remote **SIM** card of the person that wishes to join the call, the processor (16) is arranged to verify the phone number; call the verified phone number associated with the remote **SIM** card of the person that transmitted the message; and accordingly admit that phone number into the conference call.

7. The system (10) according to claim 6, wherein the memory device (18) contains instructions which are arranged to cause the processor (16) to mute an alert sound of incoming calls from phone numbers associated with remote SIM cards of persons that wish to join the conference call, so as to prevent the alert sound of incoming calls from disturbing an ongoing conference call.

8. The system (10) according to claim 7, wherein the memory device (18) contains instructions which are arranged to cause the processor (16) to mute the alert sound of outgoing calls made out to phone numbers associated with remote SIM cards of persons that wish to join the conference call, so as to prevent the sound of the outgoing calls from disturbing an ongoing conference call.

9. A method (50) comprising:
determining (52) the number of calls received/made by a first SIM card (12) during a conference call, and
if the number of calls received by the first SIM card (12) exceeds or reaches a predefined number of calls that can be received/made by the first SIM card (12), directing the rest of the calls arranged to be received/made by the first SIM card (12) to be received/made by a second SIM card (14),
including the step of automatically directing calls received during the conference call interchangeably between the first and second SIM cards (14, 16) and cojoining the calls made by the first and second SIM cards into a single conference call, or the method including the step of automatically making calls interchangeably between the first and second SIM cards (14, 16), and cojoining the calls made by the first and second SIM cards (14, 16) into a single conference call, the method **characterized by**:
further comprising receiving a call or a message from a phone number associated with a remote SIM card associated with a person that wishes to join the conference call, and verifying the phone number associated with the remote SIM card to check whether the phone number is allowed to join the conference call,
wherein in verifying the number associated with the remote SIM card associated with the person that wishes to join the conference call, the method further comprises the step of comparing the phone number associated with the remote SIM card with a list of pre-stored phone numbers, and accordingly confirming whether the phone number associated with the remote SIM card of the person that wishes to join the conference call matches with any of the other phone numbers pre-stored in a database (34).

10. The method (50) according to claim 9, wherein, when the phone number associated with the remote SIM card of the person that wishes to join the call is not verified, the method further includes flagging the phone number and rejecting the phone number from joining the conference call.

11. The method (50) according to claim 10, wherein when the phone number associated with the remote SIM card of the person that wishes to join the call is verified, the method includes calling back the phone number associated with the remote SIM card of the person that wishes to join the call.

12. The method (50) according to claim 11, including receiving a call from the phone number associated with the remote SIM card of the person that wishes to join the call; placing the call on hold until the phone number has been verified; and admitting/receiving the call from the verified phone number associated with the remote SIM card of the person that wishes to join the call, into the conference call.

13. The method (50) according to claim 12, including receiving a call-back message request from the phone number associated with the remote SIM card of the person that wishes to join the call; verifying the phone number associated with the call-back message request; upon verifying the phone number, calling the phone number associated with the remote SIM card of the person that transmitted the message, and accordingly admitting that phone number into the conference call.

14. The method (50) according to claim 9, including muting an alert sound of incoming calls from phone numbers associated with remote SIM cards of persons that wish to join the conference call, so as to prevent the alert sound of incoming calls from disturbing the people partaking in the conference call.

15. The method (50) according to claim 14, including muting an alert sound of outgoing calls made out to phone numbers associated with remote SIM cards of persons that wish to join the conference call, so as to prevent the sound of the outgoing calls from disturbing the people partaking in the conference call.

## Patentansprüche

1. System (10), umfassend:
mindestens eine erste SIM-Karte (12) und eine zweite SIM-Karte (14), wobei jede SIM-Karte (12, 14) so angeordnet ist, dass sie während einer Telefonkonferenz eine vordefinierte Anzahl von Anrufen empfängt/tätigt;
einen Prozessor (16) und eine mit dem Prozessor (16) gekoppelte Speichervorrichtung (18), wobei die Speichervorrichtung (18) Anweisungen enthält, die, wenn sie vom Prozessor (16) ausgeführt werden, so angeordnet sind, dass sie:
die Anzahl der von der ersten SIM-Karte (12) während der Telefonkonferenz empfangenen/getätigten Anrufe bestimmen; und
wenn die Anzahl der von der ersten SIM-Karte (12) empfangenen/getätigten Anrufe eine vordefinierte Anzahl von Anrufen überschreitet oder erreicht, die von der ersten SIM-Karte (12) empfangen/getätigt werden können, wobei der Prozessor so angeordnet ist, dass er die restlichen Anrufe, die von der ersten SIM-Karte (12) empfangen/getätigt werden sollen, an die zweite SIM-Karte (14) weiterleitet, damit diese sie empfängt/tätigt;
wobei der Prozessor (16) so angeordnet ist, dass er eingehende Anrufe während der Telefonkonferenz automatisch zwischen der ersten und der zweiten SIM-Karte (12, 14) umschaltet und die von der ersten und der zweiten SIM-Karte (12, 14) getätigten Anrufe zu einer einzigen Telefonkonferenz zusammenzufassen, und/oder der Prozessor (16) so angeordnet ist, dass er automatisch Anrufe zwischen der ersten und der zweiten SIM-Karte (12, 14) austauscht und die von der ersten und der zweiten SIM-Karte (12, 14) getätigten Anrufe zu einer einzigen Telefonkonferenz zusammenfasst, wobei das System **dadurch gekennzeichnet ist, dass**:
wobei die Speichervorrichtung (18) Befehle enthält, die, wenn sie vom Prozessor (16) ausgeführt werden, so angeordnet sind, dass sie den Prozessor (16) veranlassen, einen Anruf oder eine Nachricht von einer Telefonnummer zu empfangen, die mit einer entfernten SIM-Karte verbunden ist, die einer Person zugeordnet ist, die an der Telefonkonferenz teilnehmen möchte, und wobei der Prozessor (16) so angeordnet ist, dass er die mit der entfernten SIM-Karte verbundene Telefonnummer überprüft, um festzustellen, ob die Nummer zur Teilnahme an der Telefonkonferenz berechtigt ist.
wobei der Prozessor (16) bei der Überprüfung der Nummer, die mit der Remote-SIM-Karte der Person verbunden ist, die an der Telefonkonferenz teilnehmen möchte, so angeordnet ist, dass er die mit einer Remote-SIM-Karte verbundene Telefonnummer mit einer Liste vorab gespeicherter Telefonnummern vergleicht und dementsprechend bestätigt, ob die mit der Remote-SIM-Karte der Person, die an der Telefonkonferenz teilnehmen möchte, verbundene Telefonnummer mit einer der anderen Telefonnummern übereinstimmt, die in einer Datenbank (34) vorab gespeichert sind.

2. System (10) nach Anspruch 1, wobei der Prozessor (16) so angeordnet ist, dass er die Telefonnummer markiert und die Teilnahme an der Telefonkonferenz ablehnt, wenn die Telefonnummer, die mit der Remote-SIM-Karte der Person verbunden ist, die an dem Anruf teilnehmen möchte, nicht verifiziert ist.

3. System (10) nach Anspruch 2, wobei die Telefonnummer, die mit der Remote-SIM-Karte der Person verbunden ist, die an dem Anruf teilnehmen möchte, die Teilnahme an dem Anruf entweder durch Anrufen einer Telefonnummer, die mit einer der ersten und zweiten SIM-Karten verbunden ist, oder durch Senden einer Nachricht an eine Telefonnummer, die mit einer der ersten und zweiten SIM-Karten verbunden ist, anfordern kann.

4. System (10) nach Anspruch 3, wobei der Prozessor (16) so angeordnet ist, dass er die Telefonnummer, die mit der Remote-SIM-Karte der Person verbunden ist, die an dem Anruf teilnehmen möchte, zurückruft, wenn die mit der Remote-SIM-Karte der Person, die an dem Anruf teilnehmen möchte, verbundene Telefonnummer überprüft wurde.

5. System (10) nach Anspruch 4, wobei, wenn das System (10) einen Anruf von der Telefonnummer empfängt, die mit der Remote-SIM-Karte der Person verbunden ist, die an dem Anruf teilnehmen möchte, ist der Prozessor (16) so angeordnet, dass er den Anruf in die Warteschleife stellt, bis die Telefonnummer überprüft wurde, und danach ist der Prozessor (16) so angeordnet, dass er den Anruf von der Telefonnummer, die mit der Remote-SIM-Karte der Person verbunden ist, die an dem Anruf teilnehmen möchte, in die Telefonkonferenz zulässt/empfängt.

6. System (10) nach Anspruch 5, wobei, wenn das System (10) eine Rückrufaufforderung von der Telefonnummer empfängt, die mit der Remote-SIM-Karte der Person verbunden ist, die an dem Anruf teilnehmen möchte, der Prozessor (16) so angeordnet ist, dass er die Telefonnummer überprüft, die überprüfte Telefonnummer anruft, die mit der Remote-SIM-Karte der Person verbunden ist, die die Nachricht gesendet hat, und diese Telefonnummer entsprechend in die Telefonkonferenz zulässt.

7. System (10) nach Anspruch 6, wobei die Speichervorrichtung (18) Anweisungen enthält, die so angeordnet sind, dass sie den Prozessor (16) veranlassen, einen Signalton für eingehende Anrufe von Telefonnummern zu unterdrücken, die mit Remote-SIM-Karten von Personen verbunden sind, die an der Telefonkonferenz teilnehmen möchten, um zu verhindern, dass der Signalton für eingehende Anrufe eine laufende Telefonkonferenz stört.

8. System (10) nach Anspruch 7, wobei die Speichervorrichtung (18) Anweisungen enthält, die so angeordnet sind, dass sie den Prozessor (16) veranlassen, den Signalton von ausgehenden Anrufen an Telefonnummern, die mit Remote-SIM-Karten von Personen verbunden sind, die an der Telefonkonferenz teilnehmen möchten, stummzuschalten, um zu verhindern, dass der Ton der ausgehenden Anrufe eine laufende Telefonkonferenz stört.

9. Verfahren (50), umfassend:
Bestimmen (52) der Anzahl der von einer ersten SIM-Karte (12) während einer Telefonkonferenz empfangenen/getätigten Anrufe und
wenn die Anzahl der von der ersten SIM-Karte (12) empfangenen Anrufe eine vordefinierte Anzahl von Anrufen überschreitet oder erreicht, die von der ersten SIM-Karte (12) empfangen/getätigt werden können, werden die restlichen Anrufe, die von der ersten SIM-Karte (12) empfangen/getätigt werden sollen, an eine zweite SIM-Karte (14) weitergeleitet, um von dieser empfangen/getätigt zu werden.
einschließlich des Schritts des automatischen Weiterleitens von während der Telefonkonferenz empfangenen Anrufen zwischen der ersten und der zweiten SIM-Karte (14, 16) und des Zusammenführens der von der ersten und der zweiten SIM-Karte getätigten Anrufe zu einer einzigen Telefonkonferenz, oder das Verfahren, einschließlich des Schritts des automatischen Tätigens von Anrufen zwischen der ersten und der zweiten SIM-Karte (14, 16), und das Zusammenführen der von der ersten und zweiten SIM-Karte (14, 16) getätigten Anrufe zu einem einzigen Konferenzgespräch, wobei das Verfahren **dadurch gekennzeichnet ist, dass**:
ferner umfassend das Empfangen eines Anrufs oder einer Nachricht von einer Telefonnummer, die mit einer Remote-SIM-Karte verbunden ist, die einer Person zugeordnet ist, die an der Telefonkonferenz teilnehmen möchte, und das Überprüfen der mit der Remote-SIM-Karte verbundenen Telefonnummer, um zu überprüfen, ob die Telefonnummer zur Teilnahme an der Telefonkonferenz berechtigt ist,
wobei bei der Überprüfung der Nummer, die mit der Remote-SIM-Karte der Person verbunden ist, das Verfahren ferner den Schritt umfasst, die mit der Remote-SIM-Karte verbundene Telefonnummer mit einer Liste vorab gespeicherter Telefonnummern zu vergleichen und dementsprechend zu bestätigen, ob die mit der Remote-SIM-Karte der Person, die an der Telefonkonferenz teilnehmen möchte, verbundene Telefonnummer mit einer der anderen in einer Datenbank (34) vorab gespeicherten Telefonnummern übereinstimmt.

10. Verfahren (50) nach Anspruch 9, wobei, wenn die mit der Remote-SIM-Karte der Person, die an dem Anruf teilnehmen möchte, verbundene Telefonnummer nicht verifiziert wird, das Verfahren ferner das Markieren der Telefonnummer und das Ablehnen der Telefonnummer für die Teilnahme an der Telefonkonferenz einschließt.

11. Verfahren (50) nach Anspruch 10, wobei, wenn die mit der Remote-SIM-Karte der Person, die dem Anruf beitreten möchte, verbundene Telefonnummer überprüft wurde, das Verfahren das Zurückrufen der mit der Remote-SIM-Karte der Person, die dem Anruf beitreten möchte, verbundenen Telefonnummer einschließt.

12. Verfahren (50) nach Anspruch 11, das den Empfang eines Anrufs von der Telefonnummer einschließt, die mit der Remote-SIM-Karte der Person verbunden ist, die an dem Anruf teilnehmen möchte; des Halten des Anrufs, bis die Telefonnummer überprüft wurde; und des Zulassens/Empfangens des Anrufs von der überprüften Telefonnummer, die mit der Remote-SIM-Karte der Person verbunden ist, die an dem Anruf teilnehmen möchte, in die Telefonkonferenz.

13. Verfahren (50) nach Anspruch 12, das den Empfang einer Rückrufanforderung von der Telefonnummer einschließt, die mit der Remote-SIM-Karte der Person verbunden ist, die an dem Anruf teilnehmen möchte; die Überprüfung der mit der Rückrufanforderung verbundenen Telefonnummer; nach der Überprüfung der Telefonnummer den Anruf der mit der Remote-SIM-Karte der Person verbundenen Telefonnummer, die die Nachricht gesendet hat, und gemäß dieser Telefonnummer die Zulassung dieser Telefonnummer zur Telefonkonferenz.

14. Verfahren (50) nach Anspruch 9, das die Stummschaltung eines Signaltons für eingehende Anrufe von Telefonnummern einschließt, die mit Remote-SIM-Karten von Personen verbunden sind, die an der Telefonkonferenz teilnehmen möchten, um zu verhindern, dass der Signalton für eingehende Anrufe die Teilnehmer der Telefonkonferenz stört.

15. Verfahren (50) nach Anspruch 14, das die Stummschaltung eines Signaltons für ausgehende Anrufe an Telefonnummern einschließt, die mit Remote-SIM-Karten von Personen verbunden sind, die an der Telefonkonferenz teilnehmen möchten, um zu verhindern, dass der Ton der ausgehenden Anrufe die Teilnehmer der Telefonkonferenz stört.

## Revendications

1. Système (10) comprenant :
au moins une première carte SIM (12) et une seconde carte SIM (14), chaque carte SIM (12, 14) étant agencée pour recevoir/effectuer un nombre prédéfini d'appels pendant une conférence téléphonique ;
un processeur (16) et un dispositif de mémoire (18) couplé au processeur (16), le dispositif de mémoire (18) contenant des instructions qui, lorsqu'elles sont exécutées par le processeur (16), sont agencées pour :
déterminer le nombre d'appels reçus/effectués par la première carte SIM (12) pendant la conférence téléphonique ; et
si le nombre d'appels reçus/effectués par la première carte SIM (12) dépasse ou atteint un nombre prédéfini d'appels qui peuvent être reçus/effectués par la première carte SIM (12), le processeur étant agencé pour diriger le reste des appels agencés pour être reçus/effectués par la première carte SIM (12) vers la seconde carte SIM (14) ;
dans lequel le processeur (16) est agencé pour diriger automatiquement les appels entrants pendant la conférence téléphonique de manière interchangeable entre les première et seconde cartes SIM (12, 14) et pour regrouper les appels effectués par les première et seconde cartes SIM (12, 14) en une conférence téléphonique unique, et/ou le processeur (16) est agencé pour effectuer automatiquement des appels de manière interchangeable entre les première et seconde cartes SIM (12, 14) et pour regrouper les appels effectués par les première et seconde cartes SIM (12, 14) en une conférence téléphonique unique, le système étant **caractérisé en ce que** :
dans lequel le dispositif de mémoire (18) contient des instructions qui, lorsqu'elles sont exécutées par le processeur (16), sont agencées pour amener le processeur (16) à recevoir un appel ou un message d'un numéro de téléphone associé à une carte SIM distante associée à une personne qui souhaite rejoindre la conférence téléphonique, et le processeur (16) étant agencé pour vérifier le numéro de téléphone associé à la carte SIM distante afin de vérifier si le numéro est autorisé à rejoindre la conférence téléphonique,
dans lequel, lors de la vérification du numéro associé à la carte SIM à distance associée à la personne qui souhaite rejoindre la conférence téléphonique, le processeur (16) est agencé pour comparer le numéro de téléphone associé à une carte SIM à distance avec une liste de numéros de téléphone préenregistrés, et pour confirmer ne conséquence si le numéro de téléphone associé à la carte SIM distante de la personne qui souhaite rejoindre la conférence téléphonique correspond à l'un quelconque des autres numéros de téléphone préenregistrés dans une base de données (34).

2. Système (10) selon la revendication 1, dans lequel, lorsque le numéro de téléphone associé à la carte SIM à distance de la personne qui souhaite rejoindre l'appel n'est pas vérifié, le processeur (16) est agencé pour signaler le numéro de téléphone et refuser que le numéro de téléphone rejoigne la conférence téléphonique.

3. Système (10) selon la revendication 2, dans lequel le numéro de téléphone associé à la carte SIM distante de la personne qui souhaite rejoindre l'appel peut demander à rejoindre l'appel soit en appelant un numéro de téléphone associé à l'une des première et seconde cartes SIM, soit en envoyant un message à un numéro de téléphone associé à l'une des première et seconde cartes SIM.

4. Système (10) selon la revendication 3, dans lequel, lorsque le numéro de téléphone associé à la carte SIM distante de la personne qui souhaite rejoindre l'appel est vérifié, le processeur (16) est agencé pour rappeler le numéro de téléphone associé à la carte SIM à distance de la personne qui souhaite rejoindre l'appel.

5. Système (10) selon la revendication 4, dans lequel lorsque le système (10) reçoit un appel du numéro de téléphone associé à la carte SIM à distance de la personne qui souhaite rejoindre l'appel, le processeur (16) est agencé pour mettre l'appel en attente jusqu'à ce que le numéro de téléphone ait été vérifié, et ensuite le processeur (16) est agencé pour admettre/recevoir l'appel du numéro de téléphone associé à la carte SIM distance de la personne qui souhaite rejoindre l'appel, dans la conférence téléphonique.

6. Système (10) selon la revendication 5, dans lequel lorsque le système (10) reçoit une demande de rappel du numéro de téléphone associé à la carte SIM distante de la personne qui souhaite rejoindre l'appel, le processeur (16) est agencé pour vérifier le numéro de téléphone ; appeler le numéro de téléphone vérifié associé à la carte SIM à distance de la personne qui a transmis le message ; et en conséquence admettre ce numéro de téléphone dans la conférence téléphonique.

7. Système (10) selon la revendication 6, dans lequel le dispositif de mémoire (18) contient des instructions qui sont agencées pour amener le processeur (16) à couper un son d'alerte d'appels entrants provenant de numéros de téléphone associés à des cartes SIM à distance de personnes souhaitant rejoindre la conférence téléphonique, afin d'empêcher que le son d'alerte d'appels entrants ne perturbe une conférence téléphonique en cours.

8. Système (10) selon la revendication 7, dans lequel le dispositif de mémoire (18) contient des instructions qui sont agencées pour amener le processeur (16) à couper le son d'alerte d'appels sortants effectués vers des numéros de téléphone associés à des cartes SIM à distance de personnes qui souhaitent rejoindre la conférence téléphonique, afin d'empêcher que le son des appels sortants ne perturbe une conférence téléphonique en cours.

9. Procédé (50) comprenant :
la détermination (52) du nombre d'appels reçus/effectués par une première carte SIM (12) pendant une conférence téléphonique, et
si le nombre d'appels reçus par la première carte SIM (12) dépasse ou atteint un nombre prédéfini d'appels qui peuvent être reçus/effectués par la première carte SIM (12), la direction du reste des appels, agencés pour être reçus/effectués par la première carte SIM (12), pour être reçus/effectués par une seconde carte SIM (14),
comportant l'étape de direction automatique d'appels reçus pendant la conférence téléphonique de manière interchangeable entre les première et seconde cartes SIM (14, 16) et de regroupement des appels effectués par les première et seconde cartes SIM en une conférence téléphonique unique, ou le procédé comportant l'étape de réalisation automatique d'appels de manière interchangeable entre les première et seconde cartes SIM (14, 16) et de regroupement des appels effectués par les première et seconde cartes SIM (14, 16) en une conférence téléphonique unique, le procédé étant **caractérisé par** :
comprenant en outre la réception d'un appel ou d'un message provenant d'un numéro de téléphone associé à une carte SIM distante associée à une personne souhaitant rejoindre la conférence téléphonique, et la vérification du numéro de téléphone associé à la carte SIM distante afin de déterminer si le numéro est autorisé à rejoindre la conférence téléphonique,
dans lequel, pour vérifier le numéro associé à la carte SIM à distance associée à la personne qui souhaite rejoindre la conférence téléphonique, le procédé comprend en outre l'étape de comparaison du numéro de téléphone associé à la carte SIM distante avec une liste de numéros de téléphone préenregistrés, et en conséquence de confirmation si le numéro de téléphone associé à la carte SIM à distance de la personne qui souhaite rejoindre la conférence téléphonique correspond à l'un quelconque des autres numéros de téléphone préenregistrés dans une base de données (34).

10. Procédé (50) selon la revendication 9, dans lequel, lorsque le numéro de téléphone associé à la carte SIM distante de la personne qui souhaite rejoindre l'appel n'est pas vérifié, le procédé comporte en outre le signalement du numéro de téléphone et le refus que le numéro de téléphone rejoigne la conférence téléphonique.

11. Procédé (50) selon la revendication 10, dans lequel, lorsque le numéro de téléphone associé à la carte SIM distante de la personne qui souhaite rejoindre l'appel est vérifié, le procédé comporte le rappel du numéro de téléphone associé à la carte SIM distante de la personne qui souhaite rejoindre l'appel.

12. Procédé (50) selon la revendication 11, comportant la réception d'un appel du numéro de téléphone associé à la carte SIM à distance de la personne qui souhaite rejoindre l'appel ; la mise en attente de l'appel jusqu'à ce que le numéro de téléphone ait été vérifié ; et l'admission/la réception de l'appel du numéro de téléphone vérifié associé à la carte SIM à distance de la personne qui souhaite rejoindre l'appel, dans la conférence téléphonique.

13. Procédé (50) selon la revendication 12, comprenant la réception d'une demande de rappel du numéro de téléphone associé à la carte SIM distante de la personne qui souhaite rejoindre l'appel ; la vérification du numéro de téléphone associé à la demande de rappel ; après vérification du numéro de téléphone, l'appel du numéro de téléphone associé à la carte SIM distante de la personne qui a transmis le message, et en conséquence l'admission de ce numéro de téléphone dans la conférence téléphonique.

14. Procédé (50) selon la revendication 9, comprenant la coupure d'une alerte sonore d'appels entrants provenant de numéros de téléphone associés à des cartes SIM à distance de personnes qui souhaitent rejoindre la conférence téléphonique, afin d'empêcher que l'alerte sonore d'appels entrants ne perturbe les personnes participant à la conférence téléphonique.

15. Procédé (50) selon la revendication 14, comprenant la coupure d'un son d'alerte d'appels sortants effectués vers des numéros de téléphone associés à des cartes SIM à distance de personnes qui souhaitent rejoindre la conférence téléphonique, afin d'empêcher que le son des appels sortants ne perturbe les personnes participant à la conférence téléphonique.
